# EUROPÄISCHE PATENTSCHRIFT

(11) **EP 1 324 080 B1**
(45) Veröffentlichungstag und Bekanntmachung des Hinweises auf die Patenterteilung: **09.02.2005**
(21) Anmeldenummer: 01129826.2
(22) Anmeldetag: 14.12.2001
(51) Int. Cl.: G02B 5/122, G01C 15/02

(54) **Reflektor mit Schutzgehäuse**
Reflector with protective housing
Réflecteur avec boîtier de protection

(43) Veröffentlichungstag der Anmeldung: 02.07.2003
(73) Patentinhaber: Leica Geosystems AG, 9435 Heerbrugg (CH)
(72) Erfinder: Burkhardt, Klaus, 9435 Heerbrugg (CH); Nehrlich, Ralf, 9000 St. Gallen (CH); Graf, Daniel, 9442 Berneck (CH); Sergl, Michael, 9443 Widnau (CH)
(74) Vertreter: Kaminski, Susanne

(56) Entgegenhaltungen:
- EP-A- 0 816 043
- DE-A- 19 602 327
- DE-A- 19 904 033
- US-A- 3 326 230
- US-A- 4 519 674
- US-A- 5 392 521

## Beschreibung

Die Erfindung bezieht sich auf optische Reflektoren, insbesondere für die bautechnische bzw. geodätische Vermessung, nach dem Oberbegriff des Anspruchs 1.

Derartige Reflektoren werden seit Jahrzehnten im Vermessungswesen als Zielobjekte für Distanzmessgeräte bzw. automatisch zielerfassende Positionsbestimmungsgeräte eingesetzt. Die von diesen Geräten ausgesendeten, elektromagnetischen Wellen, beispielsweise Laserstrahlen in infraroten bzw. sichtbaren Wellenlängenbereichen, werden von den Reflektoren zum jeweiligen Gerät zurück reflektiert. Für eine störungsfreies und zuverlässiges Messen ist es für viele Anwendungen erforderlich, dass ein derartiger Reflektor die Strahlen gerichtet und mit hoher Intensität reflektiert.

Gerichtete Reflexionen mit einer solch geforderten Intensität können beispielsweise mit Reflexionskörpern erzielt werden, die drei jeweils zueinander senkrecht ausgerichtete, plane Reflexionsflächen sowie eine gegen jede Reflexionsfläche verkippte, plane Durchtrittsfläche für die Strahlen aufweisen. Derart ausgebildete Reflexionskörper werden Tripelprismen, Reflektorprismen, Würfeleckreflektoren oder auch Retroreflektoren genannt.

Die Reflexion der Strahlen an den Reflexionsflächen soll dabei durch Totalreflexion an Grenzflächen zwischen dem Reflexionskörper und dem die Reflexionsflächen umgebenden Gas erfolgen. Sind hingegen Grenzflächen mit Flüssigkeiten benetzt oder mit Tröpfchen aus kondensiertem Wasserdampf beschlagen, so tritt eine Totalreflektion an den Grenzflächen in der Regel nicht mehr bzw. nur in Teilbereichen oder mit verminderter Intensität auf. Dies führt unter anderem zu einer Reduktion der Einsatzdistanz von Distanzmessern bzw. der erzielbaren Positionsgenauigkeit von Positionsbestimmungsgeräten.

Da Reflektoren für Vermessungszwecke im Freien, zum Teil auch über längere Zeiträume, aufgestellt werden, sind sie Einflüssen der Witterung, wie beispielsweise Regen, Nebel und Sonnenbestrahlung, ausgesetzt. Um ein Benetzen oder Beschlagen der jeweiligen Reflexionsflächen zuverlässig zu verhindern, werden Reflexionsflächen herkömmlicher Reflektoren entweder mit einer Schutzgas-Atmosphäre, beispeilsweise aus reinem Stickstoff, umgeben, oder mit einer Reflexions-unterstützenden Beschichtung versehen.

Einerseits kann eine derartige Reflexions-unterstützende Beschichtung einer Reflexionsfläche, beispielsweise eine im Vakuum aufgedampfte Kupfer-, Aluminium, Silber- oder Goldschicht, die Herstellkosten eines solchen Reflexionskörpers bis um die Hälfte verteuern. Andererseits ist für ein dauerhaftes Aufrechterhalten der Schutzgas-Atmosphäre um eine Reflexionsfläche ein die Diffusion von Wasserdampf verhinderndes, gasdichtes Gehäuse erforderlich.

Zudem darf das Schutzgas auch bei einem Druckanstieg innerhalb des Aufnahmegehäuses, der bei jeder Erwärmung durch Sonnenstrahlung oder beim Transport in einem Verkehrsflugzeug unweigerlich auftritt, nicht verloren gehen. Die Bereitstellung eines gasdichten und druckfesten Aufnahmegehäuses erfordert jedoch wiederum einen beträchtlichen Fertigungsaufwand. Der Einsatz von preiswerten Kunststoffwerkstoffen kommt für die Herstellung gasdichter Aufnahmegehäuse praktisch nicht in Frage, da diese im allgemeinen die Diffusion von Wasserdampf nicht völlig unterbinden.

US-A-5,392,521 beschreibt einen gattungsgemässen Reflektor, der gegen Eindringen von Feuchtigkeit und Schmutz vollständig abgedichtet in ein Gehäuse eingebaut ist.

Der Erfindung liegt die Aufgabe zugrunde, Mängel des Standes der Technik zu beheben. Zudem soll ein preiswerter Reflektor vorgeschlagen werden, welcher zuverlässig Strahlen gerichtet reflektiert und über längere Zeit im Freien aufgestellt werden kann.

Diese Aufgabe wird durch einen Reflektor gelöst, bei dem die kennzeichnenden Merkmale des unabhängigen Schutzanspruchs 1 verwirklicht sind.

Wenn im Zusammenhang mit der Erfindung von einem Reflektor für Strahlen die Rede ist, so sollen darunter Reflektoren mit einem Reflexionskörper aus transparentem Material, beispielsweise aus Glas oder Kunststoff, verstanden werden, welcher wenigstens eine Reflexionsfläche und eine Durchtrittsfläche für die Strahlen aufweist. Diese Flächen können je nach Anwendung, plan, sphärisch, asphärisch oder sogar im Prinzip beliebig, beispielsweise in Form einer Freiformfläche, ausgebildet sein.

Bei einem erfindungsgemässen Reflektor erfolgt die Reflexion - wie bekannt - an wenigstens einer Reflexionsfläche durch Totalreflexion. Eine aufwendige und teure Reflektionsunterstützende Beschichtung der Reflexionsflächen ist jedoch nicht notwendig. Der Reflexionskörper ist in einem Aufnahmegehäuse aufgenommen, das die wenigstens eine Reflexionsfläche vor Witterungseinflüssen schützt, welche andernfalls das Reflexionsvermögen der Reflexionsfläche beeinträchtigen könnten. Zu diesem Zweck wird der durch die Reflexionsflächen und dem Aufnahmegehäuse begrenzte Hohlraum gegenüber der Umgebung des Reflektors für Wasser im wesentlichen undurchlässig abgedichtet. Dieses Aufnahmegehäuse weist erfindungsgemäss eine an sich bekannte Gasaustausch-Einrichtung auf, die ein selbsttätiges Austauschen von Gas des Hohlraums mit Gas der Umgebung ermöglicht. Ein solches selbsttätiges Austauschen von Gas erfolgt beispielsweise aufgrund unterschiedlicher absoluter bzw. partieller Gasdrücke innerhalb und ausserhalb des Hohlraums, die unter anderem durch Änderungen des Luftdrucks, der Luftfeuchtigkeit, der Aussen- bzw. der Innentemperatur verursacht werden.

Eine solche Gasaustausch-Einrichtung ist als eine einerseits für Wasser undurchlässige und andererseits für Gas durchlässige, semipermeable Membran ausgebildet. Solche an sich bekannten, semipermeablen Membranen werden bereits in elektronischen Geräten eingesetzt, die auch für einen Einsatz im Freien konzipiert sind und deren elektronische Bauteile zuverlässig vor Wasser geschützt werden müssen. Dabei werden beispielsweise mikroporöse Scheiben aus gewalzten PTFE als Gasaustausch-Einrichtungen eingesetzt.

Durch das erfindungsgemässe Vorsehen einer Gasaustausch-Einrichtung findet ein selbsttätiger, kontrollierter Gasaustausch und damit verbunden auch ein Ausgleich der relativen Luftfeuchtigkeit zwischen dem Hohlraum des Reflektors und dessen Umgebung statt. Nach einer im praktischen Einsatz vernachlässigbaren Zeitspanne entspricht dann die Luftfeuchtigkeit im Hohlraum der Luftfeuchtigkeit der Umgebung.

Durch das Anbringen einer Gasaustausch-Einrichtung kann selbst bei einem raschen Abfallen der Aussentemperatur die Bildung von Beschlag auf den Reflexionsflächen verhindert werden. Erfindungsgemässe Reflektoren können mit elektrooptischen Distanzmessgeräten oder automatisch zielerfassenden Positionsbestimmungsgeräten zuverlässig angemessen werden.

Dank dem erfindungsgemässen Anbringen einer Gasaustausch-Einrichtung sind die Anforderungen an das Material und die Ausgestaltung eines Aufnahmegehäuses für einen unbeschichteten Reflektor weit weniger restriktiv. So kann beispielsweise Wasserdampfdiffusion in einem bestimmten Ausmass zugelassen werden. Der Einsatz preiswerter und rationell zu verarbeitender Kunststoffe für die Herstellung solcher Aufnahmegehäuse wird möglich.

Durch die Gasaustausch-Einrichtung ist zudem gewährleistet, dass innerhalb und ausserhalb eines erfindungsgemässen Reflektors praktisch der gleiche Gasdruck herrscht. Auch drastischer Druckabfall, wie er beispielsweise nach dem Start eines Verkehrsflugzeugs in dessen Laderaum auftreten kann, kann einen erfindungsgemässen Reflektor nicht zum Bersten bringen, da der Überdruck über die Gasaustausch-Einrichtung selbsttätig entweichen kann. Das Aufnahmegehäuse kann dementsprechend dünnwandiger ausgebildet werden.

Ferner wird erfindungsgemäss vorgeschlagen, einen Reflektor mit einer Befestigungseinrichtung zu versehen, der im Gegensatz zum Stand der Technik kein Aussen-, sondern ein Innengewinde aufweist. Einerseits ist ein Innengewinde besser vor mechanischen Schlagbeschädigungen geschützt als ein Aussengewinde und andererseits wird durch das dem Reflektor zugeordnete Innengewinde eine flexible Befestigungsschnittstelle für eine grosse Anzahl von Reflektoranwendungen, beispielsweise im Berg-, Tunnel-Erdbau oder bei Objektüberwachungen, geschaffen, da ein Befestigen an normierten Gewindebolzen, Gewindestiften, mit entsprechenden Gewinden versehenen Durchsteckankern oder anderen "Direct-Fixing-Systems" einfach möglich ist.

Eine zuverlässige Reflexion der Strahlen durch den Reflexionskörper mit hoher Intensität setzt primär eine zuverlässige Reflexion der Strahlen an der wenigstens einen Reflexionsfläche voraus. Daneben ist aber auch ein möglichst ungestörter Durchtritt der Strahlen durch die Durchtrittsfläche des Reflexionskörpers notwendig. Durch ein teilweises Benetzen der Durchtrittsfläche mit Regentropfen oder Schneeflocken können die Strahlen zusätzlich, ortsabhängig, gebrochen werden. Dadurch wird die Intensität der Reflexion gemindert. Insbesondere bei an exponierten Stellen stationär aufgestellten Reflektoren kann ein Benetzen der Durchtrittsfläche auftreten. Durch einen Bauteil, der gemäss der Erfindung an einem entsprechenden Reflektor lösbar angebracht ist, kann ein solches Benetzen verhindert werden.

Bei der Ausbildung des Bauteils ist ein Kompromiss zwischen dem angestrebten Schutz und den Dimensionen des Bauteils zu treffen. Zu gross dimensionierte Bauteile sind nicht nur sperrig, sondern bieten grosse Angriffsflächen, welche bei starkem Wind zu einem unerwünschten Verstellen der Reflektoren führen kann. Selbstverständlich kann ein lösbares Anbringen derartiger Bauteile nicht nur auf erfindungsgemässen Reflektoren die voranstehend beschriebene vorteilhafte Wirkung herbeiführen.

Weitere vorteilhafte oder alternative Aus- bzw. Weiterbildungen der Erfindung sind in den Merkmalen der abhängigen Patentansprüche beschrieben.

Nachstehend wird die Erfindung anhand einer in den zwei Figuren der Zeichnung dargestellten Ausführung rein beispielhaft näher erörtert. Es zeigen:
- Figur 1: eine Explosionsdarstellung eines erfindungsgemässen Reflektors in Schrägansicht,
- Figur 2: eine Schnittdarstellung des Reflektors aus Figur 1 im montierten Zustand in Seitenansicht und
- Figur 3: einen an einem Reflektor befestigbaren Bauteil in Schrägansicht.

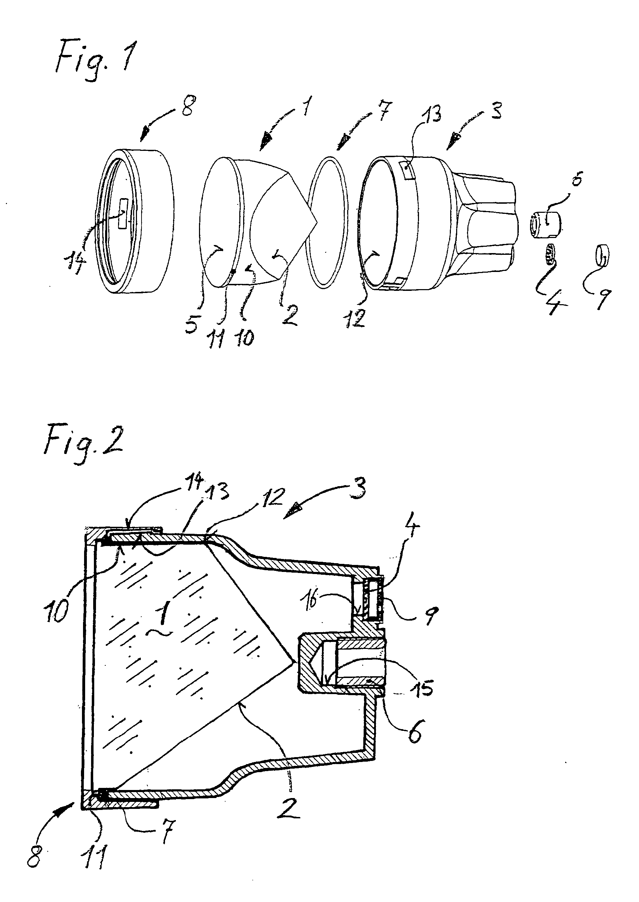

Die Figur 1 zeigt ein Ausführungsbeispiel eines erfindungsgemässen Reflektors in Explosionsdarstellung. Dieser Reflektor besteht aus einem als Tripelprisma 1 ausgebildeten Reflexionskörper aus transparentem Material, einer als O-Ring 7 ausgebildeten Dichtung und einem als Kunststoff-Spritzgussteil ausgebildeten Aufnahmegehäuse 3 mit einer als semipermeable PTFE-Membran 4 ausgebildeten Gasaustausch-Einrichtung, einer Membranabdeckung 9, einer als Einsatzbüchse 6 ausgebildeten Befestigungseinrichtung und einem Haltering 8.

Das Tripelprisma 1 weist drei plane, jeweils senkrecht zueinander ausgerichtete Reflexionsflächen 2, eine plane, gegen jede Reflexionsfläche 2 verkippte Durchtrittsfläche 5, eine auf die Durchtrittsfläche 5 senkrecht ausgerichtete Zylinderfläche 10 und einen an die Durchtrittsfläche 5 angrenzenden Kragen 11 auf. Der Innendurchmesser des O-Ring 7 entspricht dem Durchmesser der Zylinderfläche 10.

Das Aufnahmegehäuse 3 weist hier einerseits einen im wesentlichen Zylindermantel-förmig ausgebildeten Aufnahmebereich und eine über einen Verbindungsbereich mit diesem verbundene Rückwand auf. Der Aufnahmebereich weist auf seiner Aussenseite drei zueinander gleichbeabstandete Einschnappnasen 13 und auf seiner Innenseite einen Aufnahmezylinder 12 auf.

Der im wesentlichen Zylindermantel-förmig ausgebildete Haltering 8 weist an einer Innenseite drei Einschnappausnehmungen 14 auf. Die Einschnappausnehmungen 14 sind der Anordnung der Einschnappnasen 13 entsprechend angeordnet. Die Stirnseite des Halterings 8 weist zudem einen nach innen gerichteten Vorsprung auf.

Figur 2 zeigt eine Seitenansicht des Reflektors aus Figur 1 in montiertem Zustand im Schnitt dargestellt. Der O-Ring 7 ist auf das Tripelprisma 1 aufgezogen und liegt an der Zylinderfläche 10 und dem Kragen 11 an. Das Tripelprisma 1 ist seinerseits in das Aufnahmegehäuse 3 eingeschoben. Der Haltering 8 ist mit seiner Innenseite über die Aussenseite des Aufnahmebereiches des Aufnahmegehäuses 3 geschoben. Dabei wird das Tripelprisma 1 über seine Zylinderfläche 10 durch den Aufnahmezylinder 12 des Aufnahmegehäuses 3 geführt. Die drei Einschnappnasen 13 des Aufnahmegehäuses 3 sind in die ihnen zugeordneten Einschnappausnehmungen 14 (in Figur 2 ist jeweils nur eine sichtbar) des Halterings 8 eingeschnappt. Das Tripelprisma 1 wird durch den Vorsprung des Halterings 8 über den O-Ring 7 gegen das Aufnahmegehäuse 3 gedrückt gehalten. Dadurch ist das Tripelprisma 1 mit dem Aufnahmegehäuse 3 für Wasser undurchlässig abgedichtet verbunden.

Die Rückwand des Aufnahmegehäuses 3 ist hier mit einem das Aufnahmegehäuse 3 nicht durchbrechenden Sackloch 15 sowie mit einer das Aufnahmegehäuse 3 durchbrechenden Austauschöffnung 16 versehen. Diese Austauschöffnung 16 weist einen Halteabsatz auf, auf dem die Peripherie der PTFE-Membran 4 aufliegt. Durch die in den Endbereich der Austauschöffnung 16 gepresste Membranabdeckung 9 wird die PTFE-Membran 4 mit dem Aufnahmegehäuse 3 für Wasser undurchlässig verbunden. Das mit der PTFE-Membran 4 versehene Ausnahmegehäuse 3 bildet nun mit den Reflexionsflächen 2 einen geschlossenen Hohlraum, der gegenüber der Umgebung des Reflektors für Wasser undurchlässig abgedichtet ist. Ein Eindringen von Wasser und ein damit verbundenes Benetzen der Reflexionsflächen 2 kann so verhindert werden.

Die Membranabdeckung 9 weist Ausnehmungen für einen Gasaustausch auf. Da die semipermeable, für Wasser undurchlässige PTFE-Membran 4 für Gas durchlässig ausgebildet ist, kann zwischen dem Hohlraum und der Umgebung des Reflektors ein Gasaustausch selbsttätig erfolgen.

Am Aufnahmegehäuse 3 ist hier eine Einsatzbüchse 6 angebracht, die mit einem Innen- und einem Aussengewinde versehen ist. Mit dem Aussengewinde kann die Einsatzbüchse 6 selbsthemmend in das Sackloch 15 der Rückwand des Aufnahmegehäuses 3 einschraubt werden. Über das hier als M8-Gewinde ausgebildete Innengewinde der Einsatzbüchse 6 kann der Reflektor erfindungsgemäss an jedem ein M8 Gewinde aufweisenden, freistehenden Teil befestigt werden.

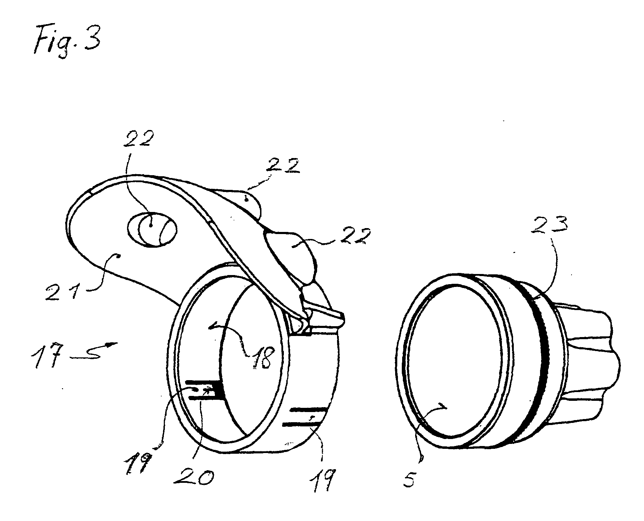

Die Figur 3 zeigt ein Ausführungsbeispiel eines erfindungsgemässen Bauteils 17 und einen Reflektor, an dem der Bauteil 17 aufschnappend befestigbar ist. Der hier gezeigte Reflektor entspricht im wesentlichen dem Reflektor der Figuren 1 und 2 und weist neben einem Reflexionskörper mit einer Durchtrittsfläche 5 ein Aufnahmegehäuse auf, an dem im Gegensatz zum Reflektor der Figuren 1 und 2 ein Rändelring 23 an der Aussenseite des Aufnahmebereiches des Aufnahmegehäuses angeordnet ist.

Der Bauteil 17 weist einen Befestigungsbereich zum Befestigen am Reflektor und einen Schutzbereich für den Schutz der Durchtrittsfläche 5 vor einem Benetzen durch Regen oder Schnee auf. Dieser Bauteil 17 ist gegebenenfalls als einstückiges Spritzgussteil ausgebildet.

Der Zylindermantel-förmig ausgebildete Befestigungsbereich weist eine innenliegende, im wesentlichen zylinderförmige Befestigungsfläche 18 auf, in der drei Haltekrallen 19 vorgesehen sind, von denen in Figur 3 nur zwei sichtbar sind. An den freien Enden weisen die Haltekrallen 19 jeweils einen nach innen gerichteten Vorsprung auf. Die dem Schutzbereich abgewandte Seite des Vorsprungs ist jeweils mit einer Einführschräge versehen. Eine Haltekralle 19 ist zudem mit einer an den Vorsprung anschliessenden, in parallel zur Achse des Zylinders erstreckenden Erhebung 20 versehen.

Der Schutzbereich weist hier ein gewölbtes Vordach 21 sowie drei das Vordach 21 durchstossende Windstutzen 22 auf. Durch die Windstutzen 22 können durch Wind verursachte Kräfte reduziert werden, ohne dass die Schutzwirkung für die Durchtrittsfläche 5 des Reflektors beeinträchtigt wird.

Wird der Bauteil 17 mit der Befestigungsfläche 18 über die Aussenseite des Reflektors geschoben, so werden die Haltekrallen 19 über die Einführschrägen vom Rändelring 23 radial nach aussen gedrückt. Haben die Vorsprünge den Rändelring 23 passiert, können die Haltekrallen 19 wieder radial nach innen zurückfedern, und hintergreifen mit den Vorsprüngen der Rändelring 23. Der Bauteil 17 ist nun lösbar am Reflektor befestigt.

Die Erhebung 20 rastet in die Rändelung des Rändelrings 23 ein und verhindert so ein selbsttätiges Verdrehen des Bauteils 17 relativ zum Reflektor. Wird ein vorbestimmtes Drehmoment auf den Bauteil 17 ausgeübt, so wird die Erhebung 20 durch den Rändelring 23 radial nach aussen gedrückt und der Bauteil für ein Verdrehen freigegeben. Damit ist es möglich den Bauteil in Abhängigkeit von lokalen Windverhältnissen relativ zum Reflektor so auszurichten, dass die Durchtrittsfläche 5 durch den Bauteil 17 optimal vor einem Benetzen durch Regentropfen oder Schneeflocken geschützt ist.

## Patentansprüche

1. Reflektor, insbesondere für die bautechnische bzw. geodätische Vermessung, mit
- einem Reflexionskörper (1)aus transparentem Material, der eine Durchtrittsfläche (5) und wenigstens eine unverspiegelte Reflexionsfläche (2) aufweist, und
- einem Aufnahmegehäuse (3) zur Aufnahme des Reflexionskörpers (1) sowie zum Schutz der wenigstens einen Reflexionsfläche (2),
wobei der durch das Aufnahmegehäuse (3) und den darin aufgenommenen Reflexionskörper (1) gebildete Hohlraum gegenüber der Umgebung des Reflektors für Wasser im wesentlichen undurchlässig abgedichtet ist, **dadurch gekennzeichnet, dass** das Aufnahmegehäuse (3) eine Gasaustausch-Einrichtung (4) aufweist, die als eine einerseits für Wasser undurchlässige und andererseits für Gas durchlässige, gegebenenfalls mikroporöse, Membran ausgebildet ist.

2. Reflektor nach Anspruch 1, **dadurch gekennzeichnet, dass** die Membran aus PTFE besteht.

3. Reflektor nach einem der vorhergehenden Ansprüche, **dadurch gekennzeichnet, dass** das, insbesondere als Spritzgussteil ausgebildete, Aufnahmegehäuse (3) aus Kunststoff besteht.

4. Reflektor nach einem der vorhergehenden Ansprüche, **dadurch gekennzeichnet, dass** der Reflexionskörper (1) drei jeweils zueinander senkrecht ausgerichtete, plane Reflexionsflächen (2) und eine gegen jede dieser Reflexionsflächen (2) verkippte, plane Durchtrittsfläche (5) aufweist.

5. Reflektor nach einem der vorhergehenden Ansprüche, **dadurch gekennzeichnet, dass** das Aufnahmegehäuse (3) eine Befestigungseinrichtung zum, insbesondere lösbaren, Befestigen des Reflektors aufweist, die mit einem, insbesondere ein M8-Gewinde aufweisenden, Innengewinde versehen ist.

6. Reflektor nach Anspruch 5, **dadurch gekennzeichnet, dass** das Innengewinde an einer ein in das Aufnahmegehäuse (3) eingelassenen Einsatzbüchse (6) vorgesehen ist.

7. Reflektor nach einem der vorhergehenden Ansprüche, **dadurch gekennzeichnet, dass** die Gasaustausch-Einrichtung (4) bzw. die Befestigungseinrichtung an der der Durchtrittsfläche (5) des Reflexionskörpers gegenüberliegenden Seite des Aufnahmegehäuses (3) angeordnet ist.

8. Reflektor nach einem der vorhergehenden Ansprüche, **dadurch gekennzeichnet, dass** eine Dichtung, gegebenenfalls ein O-Ring (7), zwischen dem Reflexionskörper (1) und dem Aufnahmegehäuse (3) vorgesehen ist.

9. Reflektor nach einem der vorhergehenden Ansprüche, **dadurch gekennzeichnet, dass** der Reflexionskörper (1) von einem an dem Aufnahmegehäuse (3), gegebenenfalls schnappbar, befestigbaren Haltering (8) mittel- oder unmittelbar gegen das Aufnahmegehäuse (3) gedrückt gehalten wird.

10. Reflektor nach einem der vorhergehenden Ansprüche, **dadurch gekennzeichnet, dass** am Aufnahmegehäuse (3), ein Bauteil (17) zum Schutz der Durchtrittsfläche (5) vor einem Benetzen durch Regen oder Schnee, gegebenenfalls aufschnappend, anbringbar ist.

11. Reflektor nach Anspruch 10, **dadurch gekennzeichnet, dass** der Reflektor einen am Aufnahmegehäuse (3) angeordneten Rändelring (23) aufweist, der im angebrachten Zustand des Bauteils (17) mit einer Erhebung (20) des Bauteils (17) in einem Wirkzusammenhang steht.

## Claims

1. Reflector, in particular for construction or geodetic surveying, comprising
- a reflective body (1) comprising transparent material, which has a transmission surface (5) and at least one unmetallized reflection surface (2), and
- a receptacle housing (3) for holding the reflective body (1) and for protecting the at least one reflection surface (2),
the cavity formed by the receptacle housing (3) and the reflective body (1) held therein being sealed substantially water-tight from the environment of the reflector, **characterized in that** the receptacle housing (3) has a gas exchange means (4) which is formed by an optionally microporous membrane which is water-impermeable on the one hand and gas-permeable on the other hand.

2. Reflector according to Claim 1, **characterized in that** the membrane consists of PTFE.

3. Reflector according to any of the preceding Claims, **characterized in that** the receptacle housing (3), in particular in the form of an injection moulded part, consists of plastic.

4. Reflector according to any of the preceding Claims, **characterized in that** the reflective body (1) has three plane reflection surfaces (2) oriented perpendicular to one another and a plane transmission surface (5) tilted relative to each of these reflection surfaces (2).

5. Reflector according to any of the preceding Claims, **characterized in that** the receptacle housing (3) has a fastening means for fastening, in particular detachable fastening, of the reflector, which means is provided with an internal thread having in particular a M8 thread.

6. Reflector according to Claim 5, **characterized in that** the internal thread is provided on an insert bush (6) let into the receptacle housing (3).

7. Reflector according to any of the preceding Claims, **characterized in that** the gas exchange means (4) or the fastening means is arranged on that side of the receptacle housing (3) which is opposite the transmission surface (5) of the reflective body.

8. Reflector according to any of the preceding Claims, **characterized in that** a seal, optionally an O-ring (7), is provided between the reflective body (1) and the receptacle housing (3).

9. Reflector according to any of the preceding Claims, **characterized in that** the reflective body (1) is kept pressed indirectly or directly against the receptacle housing (3) by a retaining ring (8) which can be fastened, optionally snapped, on the receptacle housing (3).

10. Reflector according to any of the preceding Claims, **characterized in that** a component (17) for protecting the transmission surface (5) from wetting by rain or snow can be mounted, optionally snapped, on the receptacle housing (3).

11. Reflector according to Claim 10, **characterized in that** the reflector has a knurled ring (23) arranged on the receptacle housing (3), which ring, when the component (17) is in the mounted state, interacts with a protuberance (20) of the component (17).

## Revendications

1. Réflecteur, en particulier pour les relèvements en technique de construction de bâtiments ou géodésique, avec
- un corps de réflexion (1) en matériau transparent, présentant une face de passage (5) et au moins une face de réflexion (2) non argentée, et
- un boîtier de logement (3) pour loger le corps de réflexion (1), ainsi que pour protéger la au moins une face de réflexion (2),
où l'espace creux, formé par le boîtier de logement (3) et le corps de réflexion (1) y étant logé, est isolé hermétiquement de façon pratiquement imperméable à l'eau par rapport à l'environnement du réflecteur, **caractérisé en ce que** le boîtier de logement (3) présente un dispositif d'échange de gaz (4) réalisé sous la forme d'une membrane, d'une part, imperméable à l'eau et, d'autre part, perméable aux gaz, le cas échéant micro-poreuse.

2. Réflecteur selon la revendication 1, **caractérisé en ce que** la membrane est formée est formée de PTFE.

3. Réflecteur selon l'une des revendications précédentes, **caractérisé en ce que** le boîtier de logement (3), réalisé en particulier sous forme de pièce moulée par injection, est formé de matière synthétique.

4. Réflecteur selon l'une des revendications précédentes, **caractérisé en ce que** le corps de réflexion (1) présente trois faces de réflexion (2) planes, orientées perpendiculairement les unes par rapport aux autres, et une face de passage (5) plane, inclinée par rapport à chacune de ces faces de réflexion (2).

5. Réflecteur selon l'une des revendications précédentes, **caractérisé en ce que** le boîtier de logement (3) présente un dispositif de fixation pour la fixation, en particulier désolidarisable, du réflecteur, dispositif de fixation muni d'un filetage intérieur, présentant en particulier un filetage M8.

6. Réflecteur selon la revendication 5, **caractérisé en ce que** le filetage intérieur est prévu sur une douille d'insertion (6) introduite dans le boîtier de logement (3).

7. Réflecteur selon l'une des revendications précédentes, **caractérisé en ce que** le dispositif d'échange de gaz (4) ou le dispositif de fixation est disposé sur le côté, opposé à la face de passage (5) du corps de réflexion, du boîtier de logement (3).

8. Réflecteur selon l'une des revendications précédentes, **caractérisé en ce qu'**un joint d'étanchéité, de préférence un élément torique (7), est prévu entre le corps de réflexion (1) et le boîtier de logement (3).

9. Réflecteur selon l'une des revendications précédentes, **caractérisé en ce que** le corps de réflexion (1) est maintenu, pressé indirectement ou directement contre le boîtier de logement (3), par une bague de maintien (8) susceptible d'être fixée, le cas échéant par encliquetage, sur le boîtier de logement (3).

10. Réflecteur selon l'une des revendications précédentes, **caractérisé en ce qu'**un composant (17), servant à la protection de la face de passage (5) contre le mouillage par de la pluie ou de la neige, est susceptible d'être monté, le cas échéant avec encliquetage, sur le boîtier de logement (3).

11. Réflecteur selon la revendication 10, **caractérisé en ce que** le réflecteur présente une bague moletée (23), disposée sur le boîtier de logement (3), qui, lorsque le composant (17) est à l'état monté, est placée en relation fonctionnelle avec un bossage (20) du composant (17).
